# EUROPEAN PATENT APPLICATION

(11) **EP 1 432 216 A1**
(43) Date of publication of application: **23.06.2004**
(21) Application number: 02293181.0
(22) Date of filing: 20.12.2002
(51) Int. Cl.: H04M 1/02, H04M 1/725

(54) **Display for a mobile communication device**

(71) Applicant: Motorola Inc., Schaumburg, IL 60196 (US)
(72) Inventor: Khlat, Nadim, 31270 Cugnaux (FR)
(74) Representative: Litchfield, Laura Marie

(57) **Abstract**

A display (130) for a personal communication device (100) is enclosed. The display (130) is rotatably attached to a housing (120) of the personal communication device (110). The display (130) moves relative to the housing (120) from a closed position to a plurality of open positions. In the closed position, the display (130) is concealed behind the housing (120). The display (130) includes touch-screen controls, a speaker (190), and a microphone (192) for hands-free operation. The display (130) can show information in a proper viewing orientation when moved to any of the plurality of open positions.

## Description

### FIELD OF THE DISCLOSURE

This disclosure relates generally to mobile telephones, and more particularly, to a display for a mobile telephone.

### BACKGROUND

Mobile personal communication devices have evolved from, for example, simple telephones that are only capable of voice communication, to communication devices that can provide two way voice and data communication. Additionally, with high speed mobile networks, data can be transmitted and received by personal communication devices in high speed. Accordingly, personal communication devices using the high speed standard can now provide static, streaming and/or interactive visual communication. Personal communication devices, and in particular mobile telephones, that take advantage of the high speed standard typically have a display screen that is capable of displaying complex images and video. Additionally, such displays provide information for all or some functional aspects of the mobile telephone. To display visual information, and in particular video information, the display has to be large enough to show images to a user without sacrificing clarity.

### BRIEF DESCRIPTION OF THE DRAWINGS

FIG. 1 is a front view of a mobile communication device shown in accordance with the teachings of the first example of the instant disclosure.
FIG 2. shows the mobile communication device of FIG. 1, including a display in a number of selective open positions in accordance with the teachings of the instant disclosure.
FIG. 3 is a front view of a clam-shell type mobile communication device in accordance with the teachings of the second example of the instant disclosure shown in a closed telephone position.
FIG. 4 is the clam-shell mobile communication device of FIG. 3 shown in an open telephone position.
FIG 5. shows the mobile communication device of FIG. 3, including a display in a number of selective open positions in accordance with the teachings of the instant disclosure.
FIG. 6 is a front view of a clam-shell type mobile communication device in accordance with the teachings of the third example of the instant disclosure shown in a closed telephone position
FIG. 7 is the clam-shell mobile communication device of FIG. 6 shown in an open telephone position.
FIG. 8 shows the mobile communication device of FIG. 6, including a display in a number of selective open positions in accordance with the teachings of the instant disclosure.

### DESCRIPTION OF THE PREFERRED EXAMPLES

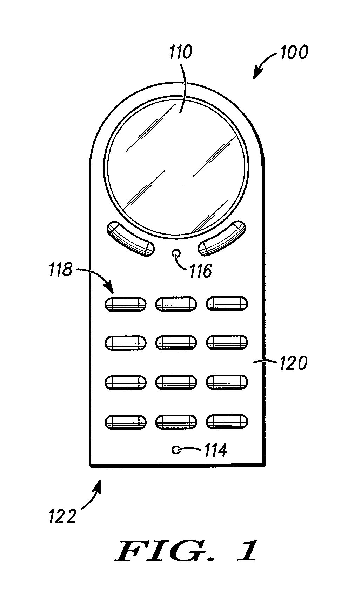

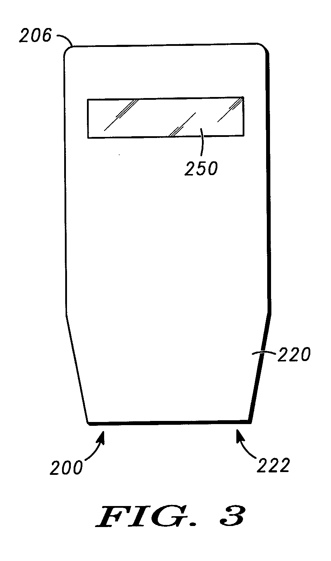

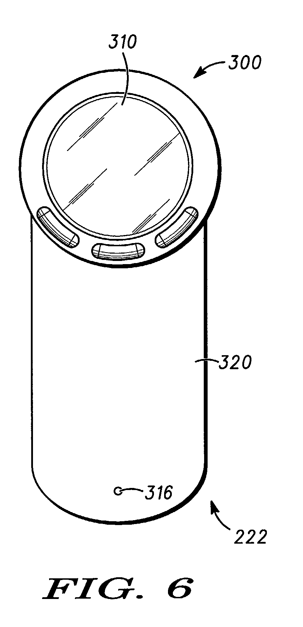

Referring to FIGS. 1-8, a handheld communication device in the form of three exemplary mobile telephones in accordance with the teachings of the disclosure is shown. A handheld communication device in the form of a telephone may be in any of the various well-known configurations. In a first example, the telephone 100 has housing 120 with a one-piece configuration as shown in FIG. 1. In a second example, as shown in FIGS. 3-5, the telephone 200 has housing 220 with a clam-shell configuration that includes two rotatably coupled sections 202 and 204 that open and close the telephone 200 by rotating relative to each other at a joint 206 in a book-like manner. In a third example, as shown in FIGS. 6-8, the telephone 300 has a housing 320 with a clam-shell configuration that includes two rotatably coupled sections 302 and 304 that open and close the telephone 300 by rotating relative to each other at a joint 206 parallel to a plane defining the keypad of the telephone 300. One of ordinary skill will readily appreciate from the following that the teachings of the disclosure herein are applicable to the any type of telephone configurations.

Referring to FIG. 1, the telephone 100 includes a wireless communications transceiver (not shown), at least one display 110 for displaying communication and operational data of the telephone 100, a microphone 114 for receiving sound input, a speaker 116 for providing sound output, and a tactile user input and control device 118, all mounted within the housing 120. The user input and control device 118 may include a numeric keypad, an alphanumeric keypad, command buttons capable of performing single or multiple functions, or various combinations thereof to provide user input into the telephone 100. One of ordinary skill in the art will readily appreciate that the user input device 118 may be a keyboard having a plurality of push buttons, touch-activated buttons, or a touch-screen with a keypad display. The telephone 100 includes a battery (not shown) and a docking port 122 for connecting the telephone to one or more external support devices. External support devices may include a number of devices well known to those of ordinary skill in the art, such as, a battery charging cradle, a data synchronization cradle for synchronizing the data in the telephone 100 with another computing or data storage device, or combinations thereof.

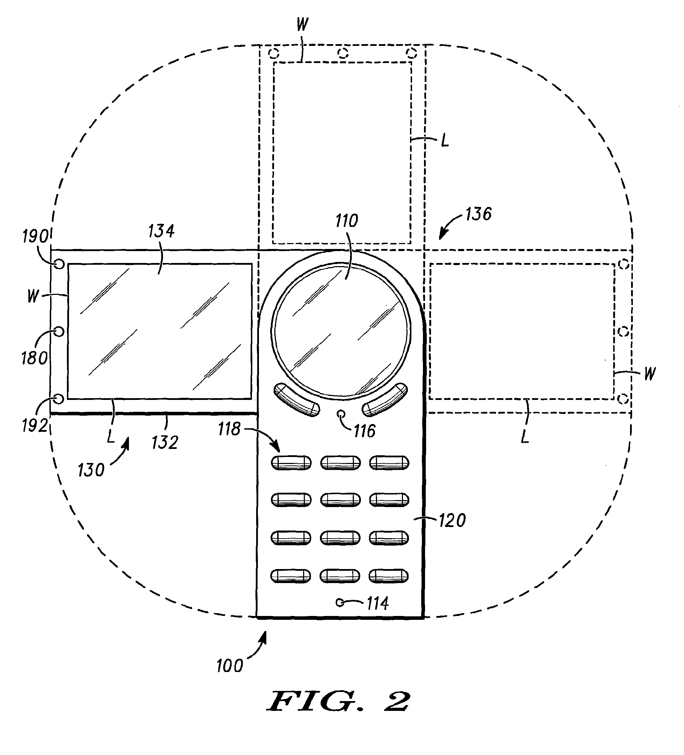

Referring to FIG. 2, the telephone 100 includes a second display 130 moveably attached to the housing 120. The second display 130 includes a display housing 132 for housing a display screen 134 and electronics associated with the operation of the display 130. One of ordinary skill in the art will appreciate that the second display can be moveable relative to the housing 120 in a variety of ways. However, in one example, the display housing 132 is attached to the housing 120 by a joint 136 and rotates about the joint 136 in a plane substantially parallel to the surface of the keypad 118. In the closed position, as shown in FIG. 1, the display 130 is aligned with the housing 120 such that the display screen 134 is concealed behind the housing 120 and is not visible to a user. The display 130 can be opened from the closed position to a number of open positions. One of ordinary skill in the art will readily appreciate that an open position is any position other than the closed position. Accordingly, as few as one open position to a large number of open positions for the display 130 can be provided. For instance, the display 130 can be selectively positioned at 90° to the left side of the housing 120, which hereinafter is referred to as the first position. The display 130 can be selectively positioned at 180° relative to the housing 120, which hereinafter is referred to as the second position. The display 130 can also be selectively positioned at 90° to the right of the housing 120, which hereinafter is referred to as the third position. With the aforementioned examples of display positions at multiples of 90° relative to the housing 120, one of ordinary skill in the art will appreciate that a user can selectively position the display 130 at any preferable angular increment relative to the housing 120. For example, a right-handed user who typically holds the housing 120 with his right hand can position the display 130 at the first position, thereby resulting in a more direct view of the display screen 134. Similarly, a left-handed user who typically holds the housing 120 with his left hand can position the display 130 at the third position, thereby resulting in a more direct view of the display screen 134. One of ordinary skill in the art will further appreciate that adjustability of the display angle relative to the housing 120 may be useful when the telephone 100 is used in an automobile. Depending on where the telephone 100 is mounted in an automobile, a user can rotate the display 130 to an open position to achieve direct view of the display screen 134. For instance, if the telephone 100 is mounted on the center console of an automobile, a display position at the first position may be preferable to the driver. Similarly, a display position at the third position may be preferable to a front passenger.

The joint 136 provides rotatable attachment of the display 130 to the housing 120. The joint 136 maintains the display 130 at the closed position and any of the open positions when the display is rotated thereto. One of ordinary skill in the art will readily appreciate the variety of methods by which the display 130 can be rotatably attached to the housing 120. For instance, the joint 136 may include a ratcheting mechanism that provides discrete angular display positions relative to the housing 120. Accordingly, the display 130 will remain in a display position and can only be rotated by sufficient force to overcome the gear-type ratcheting of the joint 136. In another example, the joint 136 may be a friction joint that provides a large number of possible open positions for the display 130. Accordingly, the display 130 can be rotated to any position by overcoming the friction in the joint 136. However, the friction in the joint 136 will maintain the display 130 at the new position. In another example, the joint 136 can be designed with one or more detents (not shown) so that the display 130 can be rotated to the first, second, or third position. Accordingly, the joint 136 will maintain the display 130 in one of the first, second and third positions when the display 130 is rotated thereto, respectively.

To facilitate communication between the display 130 and electronic circuitry of the telephone 100 located within the housing 120, the display 130 is connected to the housing 120 through wires or contacts that preserve such a connection at the closed position and any of the open positions. Such connections are well known to those of ordinary skill in the art as used in the telephone 300 of FIGS. 6-8 to connect the sections 302 and 304.

The display screen 134 provides information in a proper viewing orientation relative to the housing 120 when the display 130 is rotated to any of the open positions. A proper viewing orientation relative to the telephone preferably means that the telephone 100 is attached to a stationary object in an upright position or in an orientation that is generally held by a user. For instance, when the display 130 is rotated from the closed position to the first position, the display screen 134 is oriented in a horizontal position such that a length L of the display screen 134 is near horizontal and a width W of the display screen 134 is near vertical. Accordingly, information to be displayed on the display screen 134 will be configured for display in the first position. In other words, the display screen 134 displays images in landscape mode. The display of information on the display screen 134 when the display 130 is in the third position is similar to the first position because of the horizontal orientation of the display screen 134. When the display 130 is rotated to the second position, the display screen 134 is oriented in a vertical position such that the length L of the display screen is oriented near vertical and the width W of the display screen is oriented near horizontal. Accordingly, information to be displayed on the display screen 134 will be configured for display in the second position. In other words, the display screen 134 displays images in portrait mode. One of ordinary skill in the art will readily appreciate that when the display 130 is in the first or third position, the horizontal orientation of the display screen 134 provides more information to be displayed horizontally than when the display 130 is in the second position, which provides for more information to be displayed vertically. For instance, if the display screen 134 has a lengthwise resolution of 220 pixels and a widthwise resolution of 180 pixels when in the first or third position, the resolution of the display screen in the third position will be 180 horizontal pixels by 220 vertical pixels. One of ordinary skill in the art will further appreciate that a user can rotate the display 130 to any of the first, second or third positions depending on the preferable format and orientation of the information being displayed. For instance, for viewing visual information that is better suited to being displayed vertically, a user can rotate the display 130 to the second position. In contrast, visual information that is better suited to being displayed horizontally may be viewed by a user with the display 130 in a first or third position. The display 130 can be rotated to any other open position other than the first, second, or third position and have the information displayed on the display screen 134 configured accordingly to provide a proper viewing orientation.

To provide configuration of information that is displayed on the display screen 134 when rotated to any of the open positions, a position sensor (not shown) is provided. The position sensor is preferably disposed at or near the joint 136. The position sensor detects the position of the display 130 relative to the housing 120. The position information is then used by the electronic circuitry (not shown) of the display 130 to orient the images displayed on the display screen 134 in a proper form in accordance with the position of the display 130. The sensor may be the type that is well known to those of ordinary skill in the art and is typically used in a variety of electronic device applications. For example, such sensors may be contact sensors (i.e., resistive, inductive, etc.) or non-contact sensors (i.e., magnetic and optical).

The display screen 134 is preferably a liquid crystal display (LCD) with touch-screen input capability. Preferably, the touch-screen function of the display screen 134 is provided by a resistive system, where the display screen 134 has embedded therein a conductive layer and a resistive layer. When a user presses on a point on the display screen 134, the two layers touch and the change in the electrical field is used to calculate coordinates of the point that was touched. One of ordinary skill in the art will appreciate that other touch-screen systems, such as, capacitive systems and acoustic wave systems are also applicable to the display 130. The touch-screen function can provide a user with on-screen controls (not shown) for operation of the display 130, the operation of the telephone 100, and input for various other operations, such as browsing the internet or playing video games. One of ordinary skill in the art will appreciate, however, that both the touch-screen controls and the controls of the telephone 100 may be used to control the operations of the display 130 and the telephone 100. The display 130 may also include additional controls (not shown) disposed on the display housing 132 for controlling all, some or various aspects of the operation of the display 130.

The display 130 may include a speaker 190 and a microphone 192 in addition to the speaker 116 and microphone 114 of the telephone 100. The speaker 190 of the display 130 can provide audio information that accompanies the visual information displayed on the display screen 134. The speaker 190 of the display 130 can further provide hands-free operation when using the telephone 100 for audio communication. Similarly, the microphone 192 of the display 130 can provide both the display 130 and the telephone 100 with hands-free operation.

One of ordinary skill in the art will certainly appreciate the numerous applications for the display 130. For instance, the display 130 can be used for video games that are either played individually or in a network with other players. The display 130 can also provide additional functional features for the operation of the telephone 100. For instance, the display 130 can function as a personal digital assistant having calendar, contacts organizer, calculator, and an electronic notepad. A user of the display 130 can, for example, touch the display of a contact's name on the display screen 134 to dial the contact's telephone number with the telephone 100. The display 130 can be used for web browsing, sending and receiving email or other text messages.

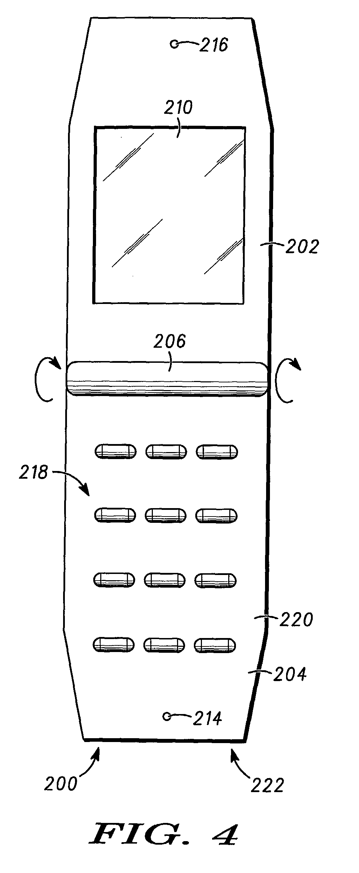

Referring to FIGS. 3 and 4, the telephone 200 includes a wireless communications transceiver (not shown), at least one display 210 for displaying communication and operational data of the telephone 200, a microphone 214 for receiving sound input, a speaker 216 for providing sound output, and a tactile user input and control device 218, all mounted within the housing 220. The user input and control device 218 may include a numeric keypad, an alphanumeric keypad, command buttons capable of performing single or multiple functions, or various combinations thereof to provide user input into the telephone 200. One of ordinary skill in the art will readily appreciate that the user input device 218 may be a keyboard having a plurality of push buttons, touch-activated buttons, or a touch-screen with a keypad display. The telephone 200 includes a battery (not shown) and a docking port 222 for connecting the telephone to one or more external support devices. External support devices may include a number of devices well known to those of ordinary skill in the art, such as, a battery charging cradle, a data synchronization cradle for synchronizing the data in the telephone 200 with another computing or data storage device, or combinations thereof.

One of ordinary skill in the art will readily appreciate that the telephone 200 may have more than one display 210 for displaying communication and operational data of the telephone 200. For instance, telephone 200 may include an additional display 250 that is viewable when the telephone 200 is closed. The additional display 250 may provide, for example, communication and telephone operational data that a user may prefer to view without having to open the telephone 200. For instance, caller identification information can be shown on the additional display 260 to allow the user the option of not having to open the telephone 200 to view the caller's identity.

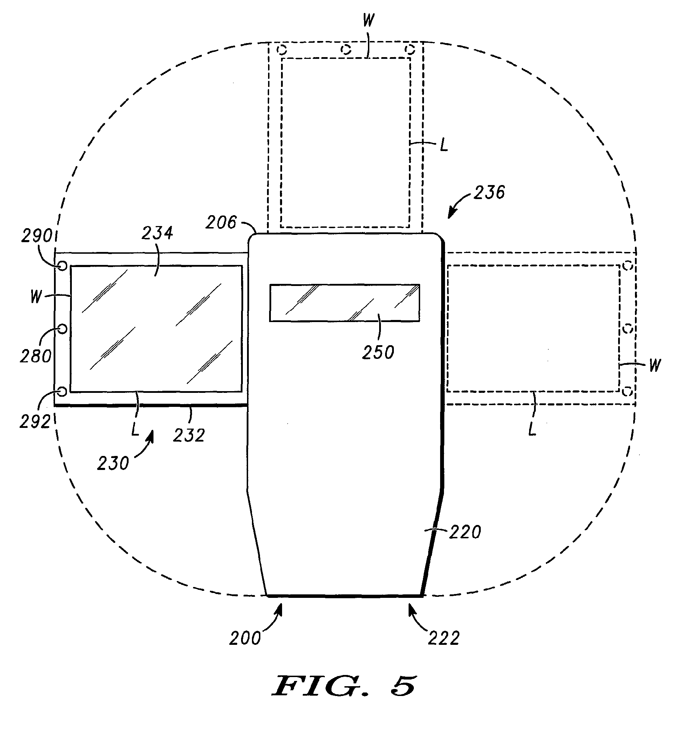

Referring to FIG. 5, the telephone 200 includes a second display 230 moveably attached to the housing 220. The second display 230 includes a display housing 232 for housing a display screen 234 and electronics associated with the operation of the display 230. One of ordinary skill in the art will appreciate that the second display can be moveably attached to the housing by a variety of well-known methods. However, in one example, the display housing 232 is attached to the housing 220 by a joint 236 and rotates about the joint 236 in a plane substantially parallel to the surface of the keypad 218. In the closed position, as shown in FIGS. 3 and 4, the display 230 is aligned with the housing 220 such that the display screen 234 is concealed behind the housing 220 and is not visible to a user. As shown in FIG. 5, the display 230 can be opened from the closed position to a number of open positions. One of ordinary skill in the art will readily appreciate that an open position is any position other than the closed position. Accordingly, as few as one open position to a large number of open positions for the display 230 can be provided. For instance, the display 230 can be selectively positioned at 90° to the left side of the housing 220, which hereinafter is referred to as the first position. The display 230 can be selectively positioned at 180° relative to the housing 220, which hereinafter is referred to as the second position. The display 230 can also be selectively positioned at 90° to the right of the housing 220, which hereinafter is referred to as the third position. With the aforementioned examples of display positions at multiples of 90° relative to the housing 220, one of ordinary skill in the art will appreciate that a user can selectively position the display 230 at any preferable angular increment relative to the housing 220. For example, a right-handed user who typically holds the housing 220 with his right hand can position the display 230 at the first position, thereby resulting in a more direct view of the display screen 234. Similarly, a left-handed user who typically holds the housing 220 with his left hand can position the display 230 at the third position, thereby resulting in a more direct view of the display screen 234. One of ordinary skill in the art will further appreciate that adjustability of the display angle relative to the housing 220 may be useful when the telephone 200 is used in an automobile. Depending on where the telephone 200 is mounted in an automobile, a user can rotate the display 230 to an open position to achieve direct view of the display screen 234. For instance, if the telephone 200 is mounted on the center console of an automobile, a display position at the first position may be preferable to the driver. Similarly, a display position at the third position may be preferable to a front passenger.

The joint 236 provides rotatable attachment of the display 230 to the housing 220. The joint 236 maintains the display 230 at the closed position and any of the open positions when the display is rotated thereto. One of ordinary skill in the art will readily appreciate the variety of methods by which the display 230 can be rotatably attached to the housing 220. For instance, the joint 236 may include a ratcheting mechanism that provides discrete angular display positions relative to the housing 220. Accordingly, the display 230 will remain in a display position and can only be rotated by sufficient force to overcome the gear-type ratcheting of the joint 236. In another example, the joint 236 may be a friction joint that provides a large number of possible open positions for the display 230. Accordingly, the display 230 can be rotated to any position by overcoming the friction in the joint 236. However, the friction in the joint 236 will maintain the display 230 at the new position. In another example, the joint 236 can be designed with one or more detents (not shown) so that the display 230 can be rotated to the first, second, or third position. Accordingly, the joint 236 will maintain the display 230 in one of the first, second and third positions when the display 130 is rotated thereto, respectively.

To facilitate communication between the display 230 and electronic circuitry of the telephone 200 located within the housing 220, the display 230 is connected to the housing 220 through wires or contacts that preserve such a connection at the closed position and any of the open positions. Such connections are well known to those of ordinary skill in the art as used in the telephone 300 of FIGS. 6-8 to connect the sections 302 and 304.

The display screen 234 provides information in a proper viewing orientation relative to the housing 220 when the display 230 is rotated to any of the open positions. A proper viewing orientation relative to the telephone preferably means that the telephone 200 is attached to a stationary object in an upright position or in an orientation that is generally held by a user. For instance, when the display 230 is rotated from the closed position to the first position, the display screen 234 is oriented in a horizontal position such that a length L of the display screen 234 is near horizontal and a width W of the display screen 234 is near vertical. Accordingly, information to be displayed on the display screen 234 will be configured for display in the first position. In other words, the display screen 234 displays images in landscape mode. The display of information on the display screen 234 when the display 230 is in the third position is similar to the first position because of the horizontal orientation of the display screen 234. When the display 230 is rotated to the second position, the display screen 234 is oriented in a vertical position such that the length L of the display screen is oriented near vertical and the width W of the display screen is oriented near horizontal. Accordingly, information to be displayed on the display screen 234 will be configured for display in the second position. In other words, the display screen 234 displays images in portrait mode. One of ordinary skill in the art will readily appreciate that when the display 230 is in the first or third position, the horizontal orientation of the display screen 234 provides more information to be displayed horizontally than when the display 230 is in the second position, which provides for more information to be displayed vertically. For instance, if the display screen 234 has a lengthwise resolution of 220 pixels and a widthwise resolution of 180 pixels when in the first or third position, the resolution of the display screen in the third position will be 180 horizontal pixels by 220 vertical pixels. One of ordinary skill in the art will further appreciate that a user can rotate the display 230 to any of the first, second or third positions depending on the preferable format and orientation of the information being displayed. For instance, for viewing visual information that is better suited to being displayed vertically, a user can rotate the display 230 to the second position. In contrast, visual information that is better suited to being displayed horizontally may be viewed by a user with the display 230 in a first or third position. The display 230 can be rotated to any other open position other than the first, second, or third position and have the information displayed on the display screen 234 configured accordingly to provide a proper viewing orientation.

To provide configuration of information that is displayed on the display screen 234 when rotated to any of the open positions, a position sensor (not shown) is provided. The position sensor is preferably disposed at or near the joint 236. The position sensor detects the position of the display 230 relative to the housing 200. The position information is then used by the electronic circuitry (not shown) of the display 230 to orient the images displayed on the display screen 234 in a proper form in accordance with the position of the display 230. The sensor may be the type that is well known to those of ordinary skill in the art and is typically used in a variety of electronic device applications. For example, such sensors may be contact sensors (i.e., resistive, inductive, etc.) or non-contact sensors (i.e., magnetic or optical).

The display screen 234 is preferably a liquid crystal display (LCD) with touch-screen input capability. Preferably, the touch-screen function of the display screen 234 is provided by a resistive system, where the display screen 234 has embedded therein a conductive layer and a resistive layer. When a user presses on a point on the display screen 234, the two layers touch and the change in the electrical field is used to calculate coordinates of the point that was touched. One of ordinary skill in the art will appreciate that other touch-screen systems, such as, capacitive systems and acoustic wave systems are also applicable to the display 230. The touch-screen function can provide a user with on-screen controls (not shown) for operation of the display 230, the operation of the telephone 200, and input for various other operations, such as browsing the internet or playing video games. One of ordinary skill in the art will appreciate, however, that both the touch-screen controls and the controls of the telephone 200 may be used to control the operations of the display 230 and the telephone 200. The display 230 may also include additional controls (not shown) disposed on the display housing 232 for controlling all, some or various aspects of the operation of the display 230.

The display 230 may include a speaker 290 and a microphone 292 in addition to the speaker 216 and microphone 214 of the telephone 200. The speaker 290 of the display 230 can provide audio information that accompanies the visual information displayed on the display screen 234. The speaker 290 of the display 230 can further provide hands-free operation when using the telephone 200 for audio communication. Similarly, the microphone 292 of the display 230 can provide both the display 230 and the telephone 200 with hands-free operation.

One of ordinary skill in the art will certainly appreciate the numerous applications for the display 230. For instance, the display 230 can be used for video games that are either played individually or in a network with other players. The display 230 can also provide additional functional features for the operation of the telephone 200. For instance, the display 230 can function as a personal digital assistant having calendar, contacts organizer, calculator, and an electronic notepad. A user of the display 230 can, for example, touch the display of a contact's name on the display screen 234 to dial the contact's telephone number with the telephone 200.

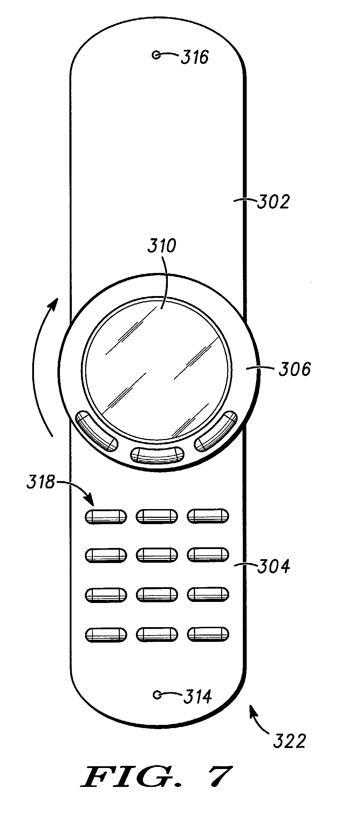

Referring to FIGS. 6 and 7, the telephone 300 includes a wireless communications transceiver (not shown), at least one display 310 for displaying communication and operational data of the telephone 300, a microphone 314 for receiving sound input, a speaker 316 for providing sound output, and a tactile user input and control device 318, all mounted within the housing 320. The user input and control device 318 may include a numeric keypad, an alphanumeric keypad, command buttons capable of performing single or multiple functions, or various combinations thereof to provide user input into the telephone 300. One of ordinary skill in the art will readily appreciate that the user input device 318 may be a keyboard having a plurality of push buttons, touch-activated buttons, or a touch-screen with a keypad display. The telephone 300 includes a battery (not shown) and a docking port 322 for connecting the telephone to one or more external support devices. External support devices may include a number of devices well known to those of ordinary skill in the art, such as, a battery charging cradle, a data synchronization cradle for synchronizing the data in the telephone 300 with another computing or data storage device, or combinations thereof.

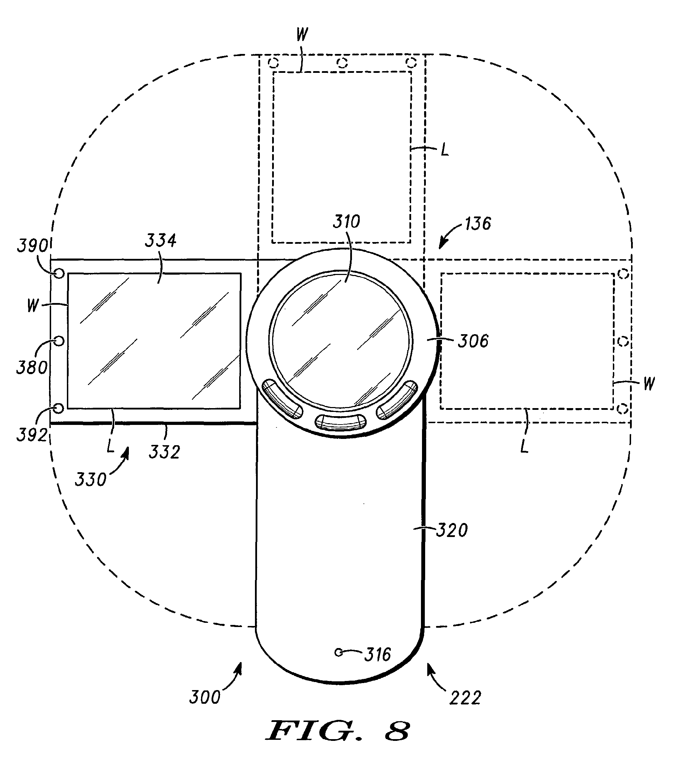

Referring to FIG. 8, the telephone 300 includes a second display 330 moveably attached to the housing 320. The second display 330 includes a display housing 332 for housing a display screen 334 and electronics associated with the operation of the display 330. One of ordinary skill in the art will appreciate that the second display can be moveably attached to the housing by a variety of well-known methods. However, in one example, the display housing 332 is attached to the housing 320 by a joint 336 and rotates about the joint 336 in a plane substantially parallel to the surface of the keypad 318. In the closed position, as shown in FIGS. 6 and 7, the display 330 is aligned with the housing 320 such that the display screen 334 is concealed behind the housing 320 and is not visible to a user. As shown in FIG. 8, the display 330 can be opened from the closed position to a number of open positions. One of ordinary skill in the art will readily appreciate that an open position is any position other than the closed position. Accordingly, as few as one open position to a large number of open positions for the display 30 can be provided. For instance, the display 330 can be selectively positioned at 90° to the left side of the housing 320, which hereinafter is referred to as the first position. The display 330 can be selectively positioned at 180° relative to the housing 320, which hereinafter is referred to as the second position. The display 330 can also be selectively positioned at 90° to the right of the housing 320, which hereinafter is referred to as the third position. With the aforementioned examples of display positions at multiples of 90° relative to the housing 320, one of ordinary skill in the art will appreciate that a user can selectively position the display 330 at any preferable angular increment relative to the housing 320. For example, a right-handed user who typically holds the housing 320 with his right hand can position the display 330 at the first position, thereby resulting in a more direct view of the display screen 334. Similarly, a left-handed user who typically holds the housing 320 with his left hand can position the display 330 at the third position, thereby resulting in a more direct view of the display screen 334. One of ordinary skill in the art will further appreciate that adjustability of the display angle relative to the housing 320 may be useful when the telephone 300 is used in an automobile. Depending on where the telephone 300 is mounted in an automobile, a user can rotate the display 330 to an open position to achieve direct view of the display screen 334. For instance, if the telephone 300 is mounted on the center console of an automobile, a display position at the first position may be preferable to the driver. Similarly, a display position at the third position may be preferable to a front passenger.

The joint 36 provides rotatable attachment of the display 330 to the housing 320. The joint 336 maintains the display 330 at the closed position and any of the open positions when the display is rotated thereto. One of ordinary skill in the art will readily appreciate the variety of methods by which the display 330 can be rotatably attached to the housing 320. For instance, the joint 336 may include a ratcheting mechanism that provides discrete angular display positions relative to the housing 320. Accordingly, the display 330 will remain in a display position and can only be rotated by sufficient force to overcome the gear-type ratcheting of the joint 336. In another example, the joint 336 may be a friction joint that provides a large number of possible open positions for the display 330. Accordingly, the display 330 can be rotated to any position by overcoming the friction in the joint 336. However, the friction in the joint 336 will maintain the display 330 at the new position. In another example, the joint 336 can be designed with one or more detents (not shown) so that the display 330 can be rotated to the first, second, or third position. Accordingly, the joint 336 will maintain the display 330 in one of the first, second and third positions when the display 330 is rotated thereto, respectively.

To facilitate communication between the display 330 and electronic circuitry of the telephone 300 located within the housing 320, the display 330 is connected to the housing 320 through wires or contacts that preserve such a connection at the closed position and any of the open positions. Such connections are well known to those of ordinary skill in the art as used to connect the sections 302 and 304.

The display screen 334 provides information in a proper viewing orientation relative to the housing 320 when the display 330 is rotated to any of the open positions. A proper viewing orientation relative to the telephone preferably means that the telephone 300 is attached to a stationary object in an upright position or in an orientation that is generally held by a user. For instance, when the display 330 is rotated from the closed position to the first position, the display screen 334 is oriented in a horizontal position such that a length L of the display screen 334 is near horizontal and a width W of the display screen 334 is near vertical. Accordingly, information to be displayed on the display screen 334 will be configured for display in the first position. In other words, the display screen 334 displays images in landscape mode. The display of information on the display screen 334 when the display 330 is in the third position is similar to the first position because of the horizontal orientation of the display screen 334. When the display 330 is rotated to the second position, the display screen 334 is oriented in a vertical position such that the length L of the display screen is oriented near vertical and the width W of the display screen is oriented near horizontal. Accordingly, information to be displayed on the display screen 334 will be configured for display in the second position. In other words, the display screen 334 displays images in portrait mode. One of ordinary skill in the art will readily appreciate that when the display 330 is in the first or third position, the horizontal orientation of the display screen 334 provides more information to be displayed horizontally than when the display 330 is in the second position, which provides for more information to be displayed vertically. For instance, if the display screen 334 has a lengthwise resolution of 220 pixels and a widthwise resolution of 180 pixels when in the first or third position, the resolution of the display screen in the third position will be 180 horizontal pixels by 220 vertical pixels. One of ordinary skill in the art will further appreciate that a user can rotate the display 330 to any of the first, second or third positions depending on the preferable format and orientation of the information being displayed. For instance, for viewing visual information that is better suited to being displayed vertically, a user can rotate the display 330 to the second position. In contrast, visual information that is better suited to being displayed horizontally may be viewed by a user with the display 330 in a first or third position. The display 330 can be rotated to any other open position other than the first, second , or third position and have the information displayed on the display screen 334 configured accordingly to provide a proper viewing orientation.

To provide configuration of information that is displayed on the display screen 334 when rotated to any of the open positions, a position sensor (not shown) is provided. The position sensor is preferably disposed at or near the joint 336. The position sensor detects the position of the display 330 relative to the housing 320. The position information is then used by the electronic circuitry (not shown) of the display 330 to orient the images displayed on the display screen 334 in a proper form in accordance with the position of the display 330. The sensor may be the type that is well known to those of ordinary skill in the art and is typically used in a variety of electronic device applications. For example, such sensors may be contact sensors (i.e., resistive, inductive, etc.) or non-contact sensors (i.e., magnetic and optical).

The display screen 334 is preferably a liquid crystal display (LCD) with touch-screen input capability. Preferably, the touch-screen function of the display screen 334 is provided by a resistive system, where the display screen 334 has embedded therein a conductive layer and a resistive layer. When a user presses on a point on the display screen 334, the two layers touch and the change in the electrical field is used to calculate coordinates of the point that was touched. One of ordinary skill in the art will appreciate that other touch-screen systems, such as, capacitive systems and acoustic wave systems are also applicable to the display 330. The touch-screen function can provide a user with on-screen controls (not shown) for operation of the display 330, the operation of the telephone 300, and input for various other operations, such as browsing the internet or playing video games. One of ordinary skill in the art will appreciate, however, that both the touch-screen controls and the controls of the telephone 300 may be used to control the operations of the display 330 and the telephone 300. The display 330 may also include additional controls (not shown) disposed on the display housing 332 for controlling all, some or various aspects of the operation of the display 330.

The display 330 may include a speaker 390 and a microphone 392 in addition to the speaker 316 and microphone 314 of the telephone 300. The speaker 390 of the display 330 can provide audio information that accompanies the visual information displayed on the display screen 334. The speaker 390 of the display 330 can further provide hands-free operation when using the telephone 300 for audio communication. Similarly, the microphone 392 of the display 330 can provide both the display 330 and the telephone 300 with hands-free operation.

One of ordinary skill in the art will certainly appreciate the numerous applications for the display 330. For instance, the display 330 can be used for video games that are either played individually or in a network with other players. The display 330 can also provide additional functional features for the operation of the telephone 300. For instance, the display 330 can function as a personal digital assistant having calendar, contacts organizer, calculator, and an electronic notepad. A user of the display 330 can, for example, touch the display of a contact's name on the display screen 334 to dial the contact's telephone number with the telephone 300. The display 330 can be used for web browsing, sending and receiving email or other text messages.

Although certain apparatus constructed in accordance with the teachings of the disclosure have been described herein, the scope of coverage of this patent is not limited thereto. On the contrary, this patent covers all embodiments of the teachings of the disclosure fairly falling within the scope of the appended claims either literally or under the doctrine of equivalents.

## Claims

1. A mobile communication device (100,200,300) having a housing having a first portion (120,220,320) pivotally attached to a second portion (132,232,332), a first display (110,210,310) disposed on one of the first and second portions of the housing, and a second display (130,230,330) disposed on one of the first and second portions of the housing, **characterized in that**:
the second portion (132,232,332) pivots horizontally parallel to the first portion (120,220,320) between a closed position and a plurality of open positions; and
the second display (130,230,330) is visible in any of the plurality of open positions and is not visible in the closed position.

2. A mobile communication device (100,200,300) according to claim 1, further **characterized in that** the portion of the housing on which the second display (130,230,330) is disposed is rotatable in angular increments relative to the other portion of the housing.

3. A mobile communication device (100,200,300) according to claim 2, further **characterized in that** the portion of the housing on which the second display (130,230,330) is disposed is fixed relative to the other portion of the housing in at least one of the plurality of open positions.

4. A mobile communication device (100,200,300) according to claim 2, further **characterized in that** the portion of the housing on which the second display (130,230,330) is disposed is fixed relative to the other portion of the housing when the portion of the housing on which the second display (130,230,330) is disposed is rotated in 90 degree increments.

5. A mobile communication device (100,200,300) according to claim 1, further **characterized in that** the second display (130,230,330) includes controls adapted to provide user input and control the second display (130,230,330).

6. A mobile communication device (100,200,300) according to claim 1, further **characterized in that** the second display (130,230,330) includes controls to orient information being displayed in a proper viewing orientation in any of the plurality of open positions.

7. For use with personal communication device (100,200,300) having a housing (120,220,320), a display device (130,230,330) having a display housing (132,232,332) pivotally attached to the housing (120,220,320), and a display screen (134,234,334) disposed in the display housing (132,232,332), **characterized in that**:
the display housing (132,232,332) pivots horizontally parallel to the housing (120,220,320) between a closed position and a plurality of open positions; and
the display screen (134,234,334) is visible in any of the plurality of open positions and is not visible in the closed position.

8. A display device (130,230,330) according to claim 7, **characterized in that** the plurality of open positions include the display housing (132,232,332) being positioned at multiples of approximately 90° relative to the housing (120,220,320).

9. A display device (130,230,330) according to claim 7, further **characterized by** a wireless communications transceiver disposed in the housing (120,220,320).

10. A display device (130,230,330) according to claim 7, further **characterized by** controls adapted to provide user input and control the display device (130,230,330).

11. A display device (130,230,330) according to claim 7, further **characterized by** controls to orient information being displayed on the display screen (134,234,334) in a proper viewing orientation in any of the plurality of open positions.

12. A mobile communication device (100,200,300) having a housing (120,220,320) having a first portion (120,220,320) and a second portion (132,232,332), **characterized in that**:
the second portion (132,232,332) is adapted to be pivotable horizontally parallel to the first portion (120,220,320) between a closed position and a plurality of open positions defined by the second portion (132,232,332) being positioned at multiples of approximately 90° relative to the first portion (120,220,320);
a first display (110,210,310) is disposed on the first portion (120,220,320),
a second display (130,230,330) is disposed on the second portion (132,232,332), and
the second display (130,230,330) is not visible when the second portion (132,232,332) is in the closed position and the second display (130,230,330) is visible when the second portion (132,232,332) is in any of the plurality of open positions.

13. A mobile communication device (100,200,300) according to claim 12, further **characterized in that** the second display (130,230,330) includes controls adapted to provide user input and control the second display (130,230,330).

14. A mobile communication device (100,200,300) according to claim 12, further **characterized in that** the second display (130,230,330) includes controls to orient information being displayed in a proper viewing orientation in any of the plurality of open positions.

15. A wireless communications handset (100,200,300) having a housing (120,220,320) having a blade portion (132,232,332) rotatably coupled thereto, a first display (110,210,310) disposed on the housing (120,220,320), and a second display (130,230,330) disposed on the blade (132,232,332), **characterized in that**:
the blade (132,232,332) is rotatably positionable in substantial alignment with the housing (120,220,320); and
the blade (132,232,332) is fixedly retainable in at least two positions that are not in substantial alignment with the housing (120,220,320).

16. The wireless communications handset (100,200,300) of claim 15, further **characterized by** the blade (132,232,332) fixedly retainable in at least two positions that are separated by approximately 90 degrees when the blade (132,232,332) is not in substantial alignment with the housing (120,220,320).

17. The wireless communications handset (100,200,300) of claim 15, further **characterized by** a circuit for orienting information on the second display (130,230,330) dependent upon the rotational position of the blade (132,232,332) relative to the housing (120,220,320).

18. The wireless communications handset (100,200,300) of claim 15, further **characterized by** the second display (130,230,330) being visible when the blade (132,232,332) is in substantial alignment with the housing (120,220,320).

19. The wireless communications handset (100,200,300) of claim 15, further **characterized by** the blade (132,232,332) rotatable in a planar dimension relative to the housing (120,220,320).

20. The wireless communications handset (100,200,300) of claim 15, further **characterized by** a wireless communications transceiver disposed in the housing (120,220,320).
